# EUROPEAN PATENT APPLICATION

(11) **EP 4 838 491 A1**
(43) Date of publication of application: **11.11.2026**
(21) Application number: 24921669.8
(22) Date of filing: 28.11.2024
(51) Int. Cl.: G07C 9/00, B60R 25/20

(54) **VEHICLE UNLOCKING METHOD AND APPARATUS, TERMINAL DEVICE AND STORAGE MEDIUM**

(30) Priority: 04.02.2024 CN 202410159516
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310000 (CN)
(72) Inventor: LIN, Bin, Ningbo, Zhejiang 315899 (CN); ZHAO, Guoming, Ningbo, Zhejiang 315899 (CN); HUANG, Guanming, Ningbo, Zhejiang 315899 (CN)
(74) Representative: Elzaburu S.L.P.
(86) International application number: PCT/CN2024/135207
(87) International publication number: WO 2025/161647

(57) **Abstract**

A vehicle unlocking and locking method, an apparatus, a terminal device, and a storage medium. The method includes: detecting a connection state of the first communication module by the dynamic key authentication module to obtain a detection result (S04); in response to the detection result indicating an abnormal condition, connecting to a user side by the dynamic key authentication module and receiving an unlocking and locking request sent by the user side through the dynamic key authentication module (S07); and executing a vehicle unlocking and locking operation by the body controller based on the unlocking and locking request (S08).

## Description

The present application claims priority to Chinese Patent Application No. 202410159516.4, filed on February 4, 2024, the entire contents of which are incorporated herein by reference.

### TECHNICAL FIELD

The present application relates to the technical field of automotive electronic control, and in particular to a vehicle unlocking and locking method, an apparatus, a terminal device, and a storage medium.

### BACKGROUND

At present, digital keys are becoming increasingly popular, and even conventional unlocking solutions are being eliminated, which places higher requirements on the security and reliability of digital keys. In general, digital keys adopt a one-master-multiple-slave architecture, and the master node is usually Bluetooth.

However, the manner of waking up a slave node by a Bluetooth low energy (BLE) master node may involve failure of the BLE master node. In this case, the whole vehicle cannot be unlocked/locked, or even started, resulting in low efficiency.

Therefore, there is a need for a vehicle unlocking and locking method to solve the problem that the vehicle cannot be unlocked/locked when the BLE master node fails.

The above content is merely intended to assist in understanding the technical solutions of the present application, and does not mean that the above content is acknowledged as related art.

### SUMMARY

The main purpose of the present application is to provide a vehicle unlocking and locking method, apparatus, terminal device, and storage medium, aiming to solve the technical problem that a vehicle cannot be unlocked/locked when a BLE master node fails.

To achieve the above purpose, the present application provides a vehicle unlocking and locking method. The vehicle unlocking and locking method is applied to a vehicle side, and the vehicle side includes a dynamic key authentication module, a first communication module, and a body controller. The method includes the following steps:
detecting a connection state of the first communication module by the dynamic key authentication module to obtain a detection result;
in response to the detection result indicating an abnormal condition, connecting to a user side by the dynamic key authentication module and receiving an unlocking and locking request sent by the user side through the dynamic key authentication module; and
executing a vehicle unlocking and locking operation by the body controller based on the unlocking and locking request.

In an embodiment, before the detecting the connection state of the first communication module by the dynamic key authentication module to obtain the detection result, the method further includes:
receiving an initial connection request from the user side;
performing connection and verification by the first communication module according to the initial connection request to obtain an initial connection result; and
obtaining device information of the user side according to the initial connection result, and sending the device information to a preset storage module for storage.

In an embodiment, the detecting the connection state of the first communication module by the dynamic key authentication module to obtain the detection result includes:
performing heartbeat packet detection on the first communication module by the dynamic key authentication module according to a preset detection duration;
in response to that a heartbeat packet of the first communication module is received within the detection duration, outputting the detection result indicating that the connection state of the first communication module is normal; and
in response to that no heartbeat packet of the first communication module is received within the detection duration, outputting the detection result indicating that the connection state of the first communication module is abnormal.

In an embodiment, after the detecting the connection state of the first communication module by the dynamic key authentication module to obtain the detection result, the method further includes:
in response to that the detection result indicates that the connection state of the first communication module is normal, performing polling detection by the first communication module; and
in response to that a communication device of the user side is detected, performing data interaction with the user side by the dynamic key authentication module to obtain interaction data, and performing a vehicle unlocking and locking operation by the body controller according to the interaction data.

In an embodiment, the performing data interaction with the user side by the dynamic key authentication module to obtain interaction data, and performing the vehicle unlocking and locking operation by the body controller according to the interaction data includes:
performing pairing authentication on the user side by the storage module to obtain an authentication result;
in response to that the authentication result is passed, sending the authentication result to the dynamic key authentication module by the storage module;
performing data interaction with the communication device of the user side by the dynamic key authentication module to obtain the interaction data;
performing data verification on the interaction data by the storage module to obtain a first verification result; and
in response to that the first verification result is passed, sending the interaction data to a preset body controller and performing the vehicle unlocking and locking operation by the body controller.

In an embodiment, the connecting to a user side by the dynamic key authentication module and receiving an unlocking and locking request sent by the user side through the dynamic key authentication module includes:
performing polling detection by a second communication module of the dynamic key authentication module;
in response to that a communication device of the user side is detected, sending a connection request to the user side by the second communication module, responding to the connection request and sending the unlocking and locking request to the dynamic key authentication module through the user side; and
receiving the unlocking and locking request sent by the user side through the dynamic key authentication module.

In an embodiment, the executing the vehicle unlocking and locking operation by the body controller based on the unlocking and locking request includes:
parsing the unlocking and locking request by the dynamic key authentication module to obtain request data;
performing data verification on the request data by the storage module to obtain a second verification result; and
in response to that the second verification result is passed, sending the request data to the body controller and performing the vehicle unlocking and locking operation by the body controller.

The embodiments of the present application further provide a vehicle unlocking and locking apparatus, including:
a detection module configured to detect a connection state of a first communication module by a dynamic key authentication module to obtain a detection result;
a connection module configured, in response to the detection result indicating an abnormal condition, to connect to a user side by the dynamic key authentication module and to receive an unlocking and locking request sent by the user side through the dynamic key authentication module; and
a vehicle unlocking and locking module configured to execute a vehicle unlocking and locking operation by a body controller based on the unlocking and locking request..

The embodiments of the present application further provide a terminal device, the terminal device including a memory, a processor, and a vehicle unlocking and locking program stored on the memory and executable on the processor. When the vehicle unlocking and locking program is executed by the processor, the steps of the above vehicle unlocking and locking method are implemented.

The embodiments of the present application further provide a computer-readable storage medium storing a vehicle unlocking and locking program. When the vehicle unlocking and locking program is executed by a processor, the steps of the above vehicle unlocking and locking method are implemented.

In the vehicle unlocking and locking method, apparatus, terminal device, and storage medium provided by the embodiments of the present application, the connection state of the first communication module is detected by the dynamic key authentication module to obtain a detection result; if the detection result is abnormal, the user side is connected by the dynamic key authentication module and an unlocking and locking request sent by the user side is received by the dynamic key authentication module; and according to the unlocking and locking request, the body controller executes a vehicle unlocking and locking operation. In this way, the dynamic key authentication module detects the connection state of the first communication module and, when BLE is abnormal, completes connection with the user side by the dynamic key authentication module, thereby providing the user side with a vehicle unlocking and locking function, achieving vehicle unlocking and locking, solving the problem that the vehicle cannot be unlocked/locked when the BLE master node fails, and improving the efficiency of vehicle unlocking and locking.

### BRIEF DESCRIPTION OF THE DRAWINGS

FIG. 1 is a functional modules schematic diagram of a terminal device of a vehicle unlocking and locking apparatus according to the present application.
FIG. 2 is a flowchart of a vehicle unlocking and locking method according to an embodiment of the present application.
FIG. 3 is a schematic diagram of a dynamic key authentication module of a vehicle unlocking and locking method according to the present application.
FIG. 4 is an overall schematic diagram of a vehicle unlocking and locking method of the present application.
FIG. 5 is a flowchart of unlocking and locking by using a first communication module in the vehicle unlocking and locking method of the present application.
FIG. 6 is a schematic diagram of unlocking and locking by using a first communication module in the vehicle unlocking and locking method of the present application.
FIG. 7 is a flowchart of connecting to a user side through a dynamic key authentication module in the vehicle unlocking and locking method of the present application.
FIG. 8 is a flowchart of completing vehicle control through a dynamic key authentication module in the vehicle unlocking and locking method of the present application.

The implementation, functional features, and advantages of the present application will be further described below in conjunction with the embodiments and with reference to the accompanying drawings.

### DETAILED DESCRIPTION OF THE EMBODIMENTS

It should be understood that the specific embodiments described herein are merely used to explain the present application, and are not intended to limit the present application.

The main solution of the embodiments of the present application is as follows. An initial connection request from the user side is received. The connection and verification is performed through the first communication module according to the initial connection request to obtain an initial connection result. The device information of the user side is obtained according to the initial connection result, and the device information is sent to a preset storage module for storage. According to a preset detection duration, heartbeat packet detection is performed on the first communication module by the dynamic key authentication module. If a heartbeat packet of the first communication module is received within the detection duration, a detection result indicating that the connection state of the first communication module is normal is output. If no heartbeat packet of the first communication module is received within the detection duration, a detection result indicating that the connection state of the first communication module is abnormal is output. If the detection result indicates that the connection state of the first communication module is normal, polling detection is performed through the first communication module. When a communication device of the user side is detected, data interaction is performed with the user side by the dynamic key authentication module to obtain interaction data, and a vehicle unlocking and locking operation is performed by the body controller according to the interaction data. Pairing authentication is performed on the user side by the storage module to obtain an authentication result. If the authentication result is passed, the authentication result is sent to the dynamic key authentication module by the storage module. Data interaction is performed with the communication device of the user side by the dynamic key authentication module to obtain interaction data. Data verification is performed on the interaction data by the storage module to obtain a first verification result. If the first verification result is passed, the interaction data is sent to a preset body controller, and a vehicle unlocking and locking operation is performed by the body controller. Polling detection is performed through a second communication module of the dynamic key authentication module. When a communication device of the user side is detected, a connection request is sent to the user side through the second communication module, the user side responds to the connection request and sends an unlocking and locking request to the dynamic key authentication module, and the unlocking and locking request sent by the user side is received through the dynamic key authentication module. The unlocking and locking request is parsed by the dynamic key authentication module to obtain request data. Data verification is performed on the request data by the storage module to obtain a second verification result. If the second verification result is passed, the request data is sent to the body controller, and a vehicle unlocking and locking operation is performed by the body controller. Accordingly, the problem that the vehicle cannot be unlocked/locked when the BLE master node fails is solved, vehicle unlocking and locking is achieved, and the efficiency of vehicle unlocking and locking is improved. The solution of the present application addresses the problem that, in the process of waking up a slave node via a BLE master node to perform an unlocking and locking procedure, failure of the master node renders the entire vehicle unable to be locked or unlocked, or even started, resulting in low efficiency. To this end, a vehicle unlocking and locking method is designed. The effectiveness of the vehicle unlocking and locking method of the present application is verified during vehicle unlocking and locking, and finally the efficiency of vehicle unlocking and locking is significantly improved by the method of the present application.

The present application embodiment relates to the following technical terms.

BLE: BLE refers to Bluetooth Low Energy technology, also known as Bluetooth 4.0. It is a type of Bluetooth technology characterized by low power consumption, low latency, low cost, and short-range wireless communication. BLE is mainly used for short-range communication among Internet of Things (IoT) devices, such as smart watches, health monitors, and smart home devices. Compared with conventional Bluetooth technology, BLE has a lower transmission rate but lower power consumption, and can provide longer battery life. BLE technology has been widely applied in various scenarios such as indoor positioning, smart homes, and the Internet of Things.

TCAM: telematics connectivity antenna module is a device used in vehicles to implement wireless communication and connectivity functions. Such a module usually consists of an antenna and related circuits, and can exchange data between the vehicle and an external network (such as a cellular network or satellite system).

CEM: central electronic module (body controller), which can be used to control the unlocking and locking function of the vehicle.

UWB: ultra-wideband is a wireless communication technology that realizes high-speed data transmission and precise positioning by transmitting wideband signals within an extremely short time. UWB technology uses a very wide frequency bandwidth to transmit data, and its frequency bandwidth is larger than that of conventional wireless communication technologies.

Dynamic key authentication module: digital key antenna module mainly includes a master control chip module (MCU), a Bluetooth Low Energy module (BLE), and an ultra-wideband module (UWB).

The embodiments of the present application take into account that, in the related art, when vehicle unlocking and locking is performed, a BLE master node is mainly used to wake up a slave node for the unlocking and locking process. Once the master node fails, the whole vehicle cannot be unlocked/locked or even started, and therefore this manner has the problem of low efficiency.

Therefore, the embodiments of the present application addresses the problem that, in the process of waking up a slave node via a BLE master node to perform a unlocking and locking procedure, failure of the master node renders the entire vehicle unable to be locked or unlocked, or even started, resulting in low efficiency. To this end, a vehicle unlocking and locking method is designed. The effectiveness of the vehicle unlocking and locking method of the present application is verified during vehicle unlocking and locking, and finally the efficiency of vehicle unlocking and locking is significantly improved by the method of the present application.

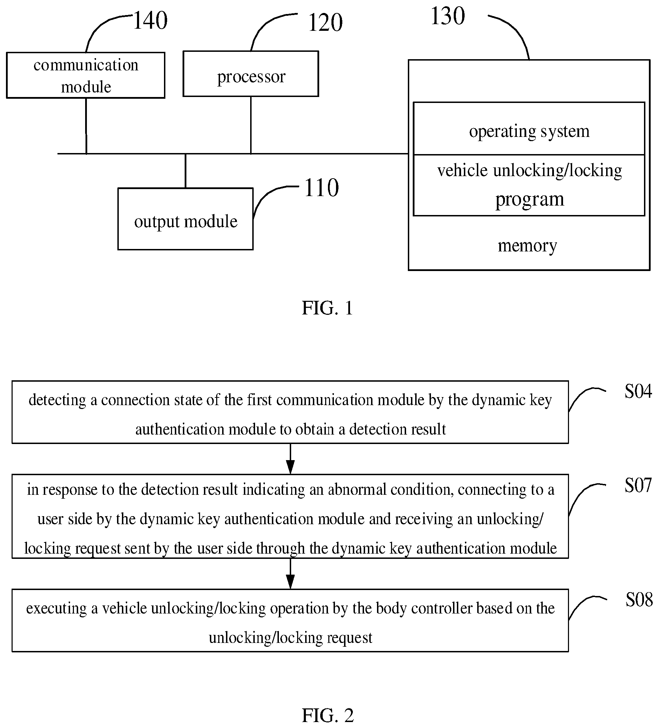

Specifically, referring to FIG. 1, FIG. 1 is a functional modules schematic diagram of a terminal device of a vehicle unlocking and locking apparatus according to the present application. The vehicle unlocking and locking apparatus may be an apparatus capable of performing vehicle unlocking and locking independently of the terminal device, and may be embodied on the terminal device in the form of hardware or software. The terminal device may be a smart mobile device with a data processing function, such as a mobile phone or a tablet computer, and may also be a fixed terminal device or server with a data processing function.

In this embodiment, the terminal device to which the vehicle unlocking and locking apparatus belongs at least includes an output module 110, a processor 120, a memory 130, and a communication module 140.

The memory 130 stores an operating system and a vehicle unlocking and locking program. The vehicle unlocking and locking apparatus may detect, by the dynamic key authentication module, the connection state of the first communication module to obtain a detection result; if the detection result is abnormal, connect, by the dynamic key authentication module, to the user side and receive, by the dynamic key authentication module, an unlocking and locking request sent by the user side; and execute, according to the unlocking and locking request, a vehicle unlocking and locking operation by the body controller. Information such as an unlocking and locking result obtained by performing vehicle unlocking and locking through the vehicle unlocking and locking program is stored in the memory 130. The output module 110 may be a display screen or the like. The communication module 140 may include a WIFI module, a mobile communication module, a Bluetooth module, and the like, and communicate with an external device or server through the communication module 140.

When the vehicle unlocking and locking program in the memory 130 is executed by the processor, the following steps are implemented:
detecting a connection state of the first communication module by the dynamic key authentication module to obtain a detection result;
if the detection result indicating an abnormal condition, connecting to a user side by the dynamic key authentication module and receiving an unlocking and locking request sent by the user side through the dynamic key authentication module; and
executing a vehicle unlocking and locking operation by the body controller based on the unlocking and locking request.

Further, when the vehicle unlocking and locking program in the memory 130 is executed by the processor, the following steps are further implemented:
receiving an initial connection request from the user side;
performing connection and verification by the first communication module according to the initial connection request to obtain an initial connection result; and
obtaining device information of the user side according to the initial connection result, and sending the device information to a preset storage module for storage.

Further, when the vehicle unlocking and locking program in the memory 130 is executed by the processor, the following steps are further implemented:
performing heartbeat packet detection on the first communication module by the dynamic key authentication module according to a preset detection duration;
if a heartbeat packet of the first communication module is received within the detection duration, outputting the detection result indicating that the connection state of the first communication module is normal; and
if no heartbeat packet of the first communication module is received within the detection duration, outputting the detection result indicating that the connection state of the first communication module is abnormal.

Further, when the vehicle unlocking and locking program in the memory 130 is executed by the processor, the following steps are further implemented:
if the detection result indicates that the connection state of the first communication module is normal, performing polling detection by the first communication module; and
when a communication device of the user side is detected, performing data interaction with the user side by the dynamic key authentication module to obtain interaction data, and performing a vehicle unlocking and locking operation by the body controller according to the interaction data.

Further, when the vehicle unlocking and locking program in the memory 130 is executed by the processor, the following steps are further implemented:
performing pairing authentication on the user side by the storage module to obtain an authentication result;
if the authentication result is passed, sending the authentication result to the dynamic key authentication module by the storage module;
performing data interaction with the communication device of the user side by the dynamic key authentication module to obtain the interaction data;
performing data verification on the interaction data by the storage module to obtain a first verification result; and
if the first verification result is passed, sending the interaction data to a preset body controller and performing the vehicle unlocking and locking operation by the body controller.

Further, when the vehicle unlocking and locking program in the memory 130 is executed by the processor, the following steps are further implemented:
performing polling detection by a second communication module of the dynamic key authentication module;
when a communication device of the user side is detected, sending a connection request to the user side by the second communication module, responding to the connection request and sending the unlocking and locking request to the dynamic key authentication module through the user side; and
receiving the unlocking and locking request sent by the user side through the dynamic key authentication module.

Further, when the vehicle unlocking and locking program in the memory 130 is executed by the processor, the following steps are further implemented:
parsing the unlocking and locking request by the dynamic key authentication module to obtain request data;
performing data verification on the request data by the storage module to obtain a second verification result; and
if the second verification result is passed, sending the request data to the body controller and performing the vehicle unlocking and locking operation by the body controller.

Through the above solution, the connection state of the first communication module is detected by the dynamic key authentication module to obtain a detection result; if the detection result is abnormal, the user side is connected to the dynamic key authentication module and an unlocking and locking request sent by the user side is received by the dynamic key authentication module; and according to the unlocking and locking request, a vehicle unlocking and locking operation is executed by the body controller, thereby solving the problem that the vehicle cannot be unlocked/locked when the BLE master node fails. The solution of the present application addresses the problem that, in the process of waking up a slave node via a BLE master node to perform a unlocking and locking procedure, failure of the master node renders the entire vehicle unable to be locked or unlocked, or even started, resulting in low efficiency. To this end, a vehicle unlocking and locking method is designed. The effectiveness of the vehicle unlocking and locking method of the present application is verified during vehicle unlocking and locking, and finally the efficiency of vehicle unlocking and locking is significantly improved by the method of the present application.

Based on the above terminal device architecture, but not limited to the above framework, the method embodiments of the present application are proposed.

Referring to FIG. 2, FIG. 2 is a flowchart of a vehicle unlocking and locking method according to an embodiment of the present application. The vehicle unlocking and locking method includes:
Step S04: detecting a connection state of the first communication module by the dynamic key authentication module to obtain a detection result.

The execution subject of the method in this embodiment may be a vehicle unlocking and locking apparatus, or may be a vehicle unlocking and locking terminal device or server. In this embodiment, the vehicle unlocking and locking apparatus is taken as an example. The vehicle unlocking and locking apparatus may be integrated in a terminal device having a data processing function.

Before describing the method of this embodiment, it should be clear that, at present, digital keys are becoming increasingly popular, and even conventional unlocking solutions are being eliminated, which places higher requirements on the security and reliability of digital keys. In this embodiment, the digital key adopts a one-master-multiple-slave architecture, and the master node is usually Bluetooth. In the Zeekr digital key, BLE in telematics connectivity antenna module (TCAM4) is mainly used as the master node of the digital key, and the dynamic key authentication module (digital key antenna module, DKAM) is used as the slave node for unlocking and locking. This manner can solve the problem that the vehicle cannot be unlocked/locked when the BLE master node fails. In this embodiment, both the first communication module and the second communication module are BLE modules.

Therefore, when a digital key is used for unlocking and locking, the dynamic key authentication module can detect the state of the first communication module, that is, the BLE module carried by the vehicle-mounted system itself, to obtain a detection result. The detection manner is mainly in the form of heartbeat packets. When the dynamic key authentication module can receive a heartbeat packet sent by the BLE, the current first communication module is considered normal, and the first communication module may be used for vehicle unlocking and locking. Otherwise, it is considered that the current first communication module of the vehicle cannot respond to the user's unlocking and locking instruction, and the state of the first communication module is output as abnormal.

It should be noted that there may be one or more dynamic key authentication modules in this embodiment, and the specific number should be set according to actual service requirements.

Step S07: in response to the detection result indicating an abnormal condition, connecting to a user side by the dynamic key authentication module and receiving an unlocking and locking request sent by the user side through the dynamic key authentication module.

Since the main problem addressed by the present application is the unlocking and locking operation of the vehicle when the first communication module is abnormal, when the detection result indicates that the first communication module is abnormal, the dynamic key authentication module is connected to the user side. During the connection process, it should be understood that the dynamic key authentication module also exists in the vehicle-mounted system. Therefore, when the vehicle is bound to the user side for the first time, user information and user device information corresponding to the user side have already been stored to facilitate connection. The dynamic key authentication module includes at least a BLE module and a UWB module. In this embodiment, the BLE module of the dynamic key authentication module is referred to as the second BLE.

Step S08: executing a vehicle unlocking and locking operation by the body controller based on the unlocking and locking request.

After the connection between the dynamic key authentication module and the user side is completed, the unlocking and locking request sent by the user side can be received through the dynamic key authentication module, and authentication is performed according to the user's unlocking and locking request. Finally, the body controller in the vehicle-mounted system can execute the vehicle unlocking and locking operation, thereby solving the problem that the vehicle cannot be unlocked/locked when the master node is abnormal.

Specifically, before step S04 of detecting a connection state of the first communication module by the dynamic key authentication module to obtain a detection result, the method further includes:
Step S01: receiving an initial connection request from the user side;
Step S02: performing connection and verification by the first communication module according to the initial connection request to obtain an initial connection result; and
Step S03: obtaining device information of the user side according to the initial connection result, and sending the device information to a preset storage module for storage.

In order to make it possible to send an unlocking and locking request even when the first communication module is abnormal, it is necessary first to store device information and user information of the user side. Therefore, the initial connection request from the user side is received through the first BLE module, and authenticated connection is performed on the initial connection request.

After the connection is completed, the device information of the user side and the user information of the user side can be obtained. It should be understood that the number of connected devices in this embodiment may be set according to actual service requirements. For example, for safety protection, the current vehicle owner may set the number of connections to 1, and therefore only a single device can be connected and user information can be stored. When the device is connected to the vehicle, the user's driving configuration can be synchronously read, and corresponding adjustment can be made to the seat, central control screen, and rear-view mirror.

Similarly, when a plurality of devices are required to be connected, corresponding settings can also be made to the vehicle-mounted system, and the obtained user information can be stored, so that when the first communication module node is abnormal later, the dynamic key authentication module can identify and connect to the user.

More specifically, the above step S04 of detecting a connection state of the first communication module by the dynamic key authentication module to obtain a detection result includes:
Step S041: performing heartbeat packet detection on the first communication module by the dynamic key authentication module according to a preset detection duration;
Step S042: in response to that a heartbeat packet of the first communication module is received within the detection duration, outputting the detection result indicating that the connection state of the first communication module is normal; and
Step S043: in response to that no heartbeat packet of the first communication module is received within the detection duration, outputting the detection result indicating that the connection state of the first communication module is abnormal.

The above solution mentions connecting to the user side through the first communication module. Therefore, when vehicle unlocking and locking is performed, the first communication module can be preferentially used for unlocking and locking. However, when the first communication module is abnormal, connection and unlocking and locking may be performed through the dynamic key authentication module. This gives rise to a question: how to determine whether the first communication module is abnormal.

In this embodiment, the first communication module sends heartbeat packets. That is, within a preset duration (which may be set according to actual service requirements, for example, detection once every 5 seconds when the battery level is low, and once every 1 second when the battery level is sufficient), if the dynamic key authentication module can receive a heartbeat packet from the first communication module, the detection result indicating that the connection state of the first communication module is normal is output; if the dynamic key authentication module cannot receive a heartbeat packet from the first communication module, the detection result indicating that the connection state of the first communication module is abnormal is output. In this process, in order to avoid power consumption, the dynamic key authentication module only enables low-power polling detection, that is, only receives heartbeat packets from the first communication module. In this way, detection of the connection state of the first communication module can be achieved, thereby avoiding the problems of untimely response when the user needs to unlock/lock the vehicle and excessive power consumption.

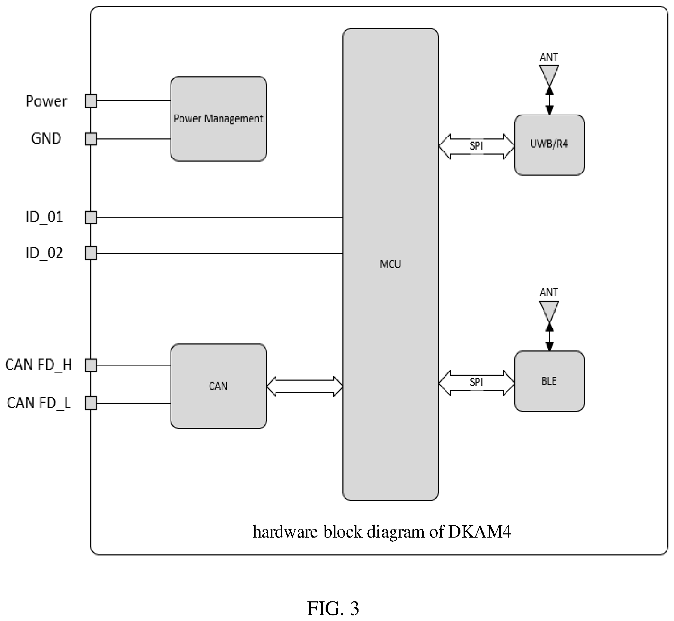

Further, as shown in FIG. 3, FIG. 3 is a schematic diagram of a dynamic key authentication module of a vehicle unlocking and locking method according to the present application.

The dynamic key authentication module in this embodiment includes at least a BLE module and a UWB module, both of which are connected to the MCU (i.e. the central controller) in the dynamic key authentication module. According to different received communication protocols, corresponding operations are completed through different modules.

The UWB module provides a wireless communication technology that realizes high-speed data transmission and precise positioning by transmitting wideband signals within an extremely short time. UWB technology uses a very wide frequency bandwidth to transmit data, and its frequency bandwidth is larger than that of conventional wireless communication technologies. BLE refers to Bluetooth Low Energy technology, also known as Bluetooth 4.0. It is a type of Bluetooth technology characterized by low power consumption, low latency, low cost, and short-range wireless communication. BLE is mainly used for short-range communication among Internet of Things (IoT) devices, such as smart watches, health monitors, and smart home devices. Compared with conventional Bluetooth technology, BLE has a lower transmission rate but lower power consumption, and can provide longer battery life.

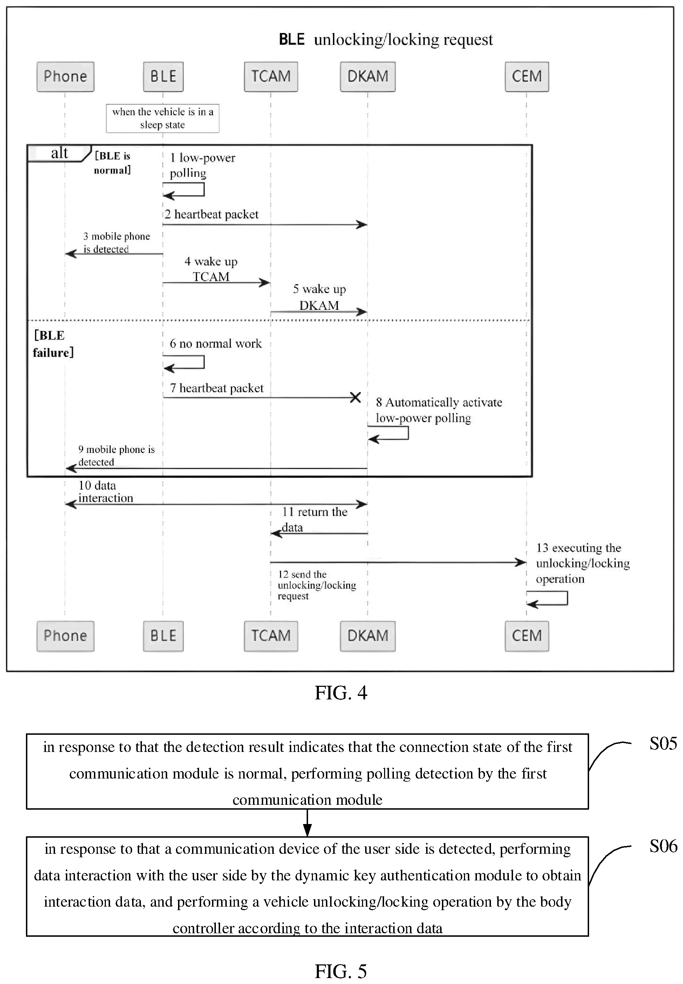

Further, as shown in FIG. 4, FIG. 4 is an overall schematic diagram of a vehicle unlocking and locking method of the present application.

When the first communication module is normal, the first communication module detects whether the user side is connected. When the user side is in a connected state with the first BLE module, the dynamic key authentication module is woken up through the TCAM to complete the corresponding unlocking and locking operation. When the first communication module is abnormal, the dynamic key authentication module cannot receive heartbeat packets from the first communication module, and therefore low-power polling of the dynamic key authentication module is enabled; when the user side is detected, the dynamic key authentication module connects to the user side and executes the corresponding unlocking and locking operation.

Through the above solution, the connection state of the first communication module is detected by the dynamic key authentication module to obtain a detection result; if the detection result is abnormal, the user side is connected to the dynamic key authentication module and an unlocking and locking request sent by the user side is received by the dynamic key authentication module; and according to the unlocking and locking request, a vehicle unlocking and locking operation is executed by the body controller. In this way, the dynamic key authentication module detects the connection state of the first communication module and, when BLE is abnormal, completes connection with the user side by the dynamic key authentication module, thereby providing the user side with a vehicle unlocking and locking function, achieving vehicle unlocking and locking, solving the problem that the vehicle cannot be unlocked/locked when the BLE master node fails, and improving the efficiency of vehicle unlocking and locking.

Referring to FIG. 5, FIG. 5 is a flowchart of unlocking and locking by using a first communication module in the vehicle unlocking and locking method of the present application.

Based on the embodiment shown in FIG. 2, after the step S04 of detecting a connection state of the first communication module by the dynamic key authentication module to obtain a detection result, the method further includes:

Step S05: in response to that the detection result indicates that the connection state of the first communication module is normal, performing polling detection by the first communication module; and

Step S06: in response to that a communication device of the user side is detected, performing data interaction with the user side by the dynamic key authentication module to obtain interaction data, and performing a vehicle unlocking and locking operation by the body controller according to the interaction data.

In this embodiment, two results are obtained by detecting the state of the first communication module through the dynamic key authentication module, either the first communication module is normal or it is abnormal.

When the connection state of the first communication module is normal, the polling detection function is enabled through the first communication module to perform real-time detection of the user side. Since corresponding device information and user information of the user side have already been stored during the previous connection, when the user side is connected, the dynamic key authentication module is woken up through the TCAM module and waits for the next instruction from the user side.

When the user side sends an unlocking and locking request, data interaction is performed between the dynamic key authentication module and the user side to obtain interaction data, and finally the interaction data is sent to the body controller for the vehicle unlocking and locking operation. It should be understood that, in this embodiment, the interaction data is unlocking and locking data, and in other embodiments it may also be an ignition request, that is a request to start the vehicle.

Specifically, the above step S06 of performing data interaction with the user side by the dynamic key authentication module to obtain interaction data, and performing a vehicle unlocking and locking operation by the body controller according to the interaction data includes:
Step S061: performing pairing authentication on the user side by the storage module to obtain an authentication result;
Step S062: in response to that the authentication result is passed, sending the authentication result to the dynamic key authentication module by the storage module;
Step S063: performing data interaction with the communication device of the user side by the dynamic key authentication module to obtain the interaction data;
Step S064: performing data verification on the interaction data by the storage module to obtain a first verification result; and
Step S065: in response to that the first verification result is passed, sending the interaction data to a preset body controller and performing the vehicle unlocking and locking operation by the body controller.

After the connection between the first communication module and the user side is completed and the dynamic key authentication module is woken up, interaction with the user may be performed. Specifically, pairing authentication may be performed on the user side through the storage module, that is, it is analyzed whether the operation instruction currently sent by the user side may be executed. It can be understood that one vehicle may correspond to a plurality of operators, but the vehicle owner possesses the authority with the most comprehensive operation functions. Therefore, the vehicle owner may limit functions for other user sides, such as trunk opening limitation, vehicle door opening limitation, ignition limitation, and vehicle positioning limitation.

When the authentication result is passed, that is, when the current user side is allowed to perform the operation, data interaction is performed with the user side through the dynamic key authentication module, namely receiving the unlocking and locking request sent by the user side and returning a notification indicating that verification is in progress, and the like.

Data verification is performed on the interaction data through the storage module. When the verification result is passed, this indicates that the current user side has operation authority and that the identity is normal, and the interaction data is sent to the body controller to execute the corresponding vehicle unlocking and locking operation.

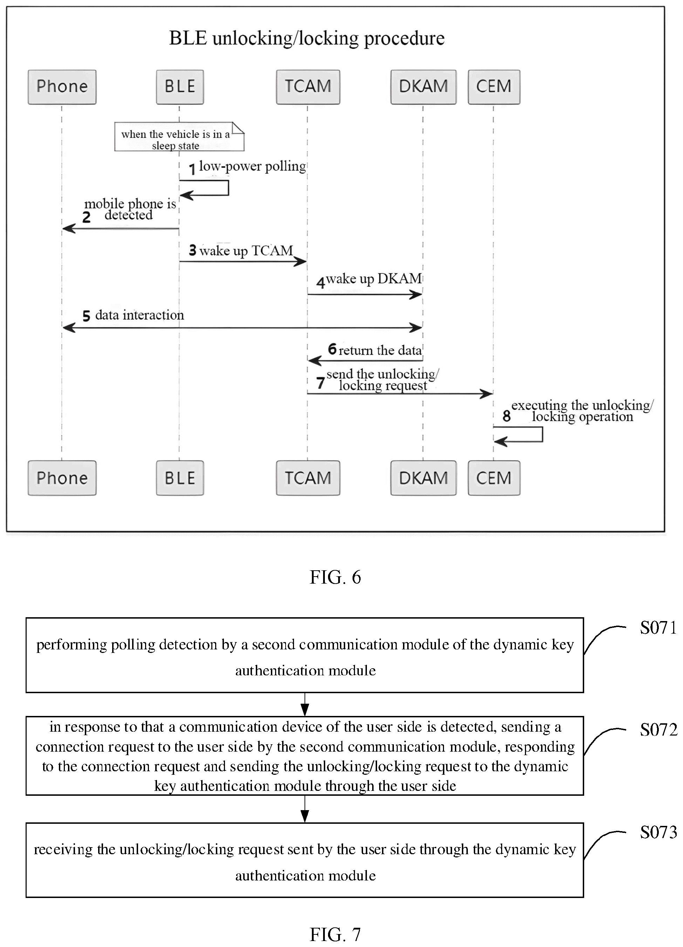

More specifically, as shown in FIG. 6, FIG. 6 is a schematic diagram of unlocking and locking by using a first communication module in the vehicle unlocking and locking method of the present application.

First, when the vehicle is in a sleep state, the first communication module detects the user side. When the user side is detected, the first communication module connects to the user side and wakes up the dynamic key authentication module through the TCAM.

Then, the dynamic key authentication module performs data interaction with the user side to obtain interaction data, and sends the data to the TCAM for data verification. When the verification result is passed, an unlocking and locking request is sent to the body controller (CEM).

Finally, when the body controller receives the unlocking and locking request, the corresponding unlocking and locking operation is executed.

Through the above solution, if the detection result indicates that the connection state of the first communication module is normal, polling detection is performed through the first communication module; and when a communication device of the user side is detected, data interaction is performed with the user side by the dynamic key authentication module to obtain interaction data, and a vehicle unlocking and locking operation is performed by the body control according to the interaction data. When the first communication module is in a normal state, corresponding unlocking and locking operations are provided for the user, thereby solving the inconvenience caused by the need to carry a key for vehicle unlocking and locking and improving the efficiency of vehicle unlocking and locking.

Referring to FIG. 7, FIG. 7 is a flowchart of connecting to a user side through a dynamic key authentication module in the vehicle unlocking and locking method of the present application.

Based on the embodiment shown in FIG. 2, the above step S07 of in response to the detection result indicating an abnormal condition, connecting to a user side by the dynamic key authentication module and receiving an unlocking and locking request sent by the user side through the dynamic key authentication module, includes:
Step S071: performing polling detection by a second communication module of the dynamic key authentication module;
Step S072: in response to that a communication device of the user side is detected, sending a connection request to the user side by the second communication module, responding to the connection request and sending the unlocking and locking request to the dynamic key authentication module through the user side; and
Step S073: receiving the unlocking and locking request sent by the user side through the dynamic key authentication module.

When the first communication module of the vehicle is abnormal, the user is unable to perform an unlocking and locking operation. At this time, the dynamic key authentication module is used to connect to the user side. Based on the above embodiments, it can be seen that the dynamic key authentication module includes at least a BLE module and a UWB module. Therefore, at this time, polling detection is performed through the BLE module in the dynamic key authentication module (i.e. the second BLE module), mainly to detect whether a user side is nearby.

When a communication device of the user side is detected, a connection request is sent to the user side through the second BLE module. Since the vehicle-mounted system stores device information of the user side, and the user side similarly stores information of the vehicle-mounted system, the connection between the user side and the dynamic key authentication module can be completed.

After the connection is completed, the dynamic key authentication module may receive the unlocking and locking request sent by the user side and correspondingly perform subsequent processing.

Specifically, after the connection with the user side is completed, it is still necessary to perform the vehicle unlocking and locking operation. Therefore, based on the embodiment shown in FIG. 2, the above step S08 of executing a vehicle unlocking and locking operation by the body controller based on the unlocking and locking request, includes:
Step S081: parsing the unlocking and locking request by the dynamic key authentication module to obtain request data;
Step S082: performing data verification on the request data by the storage module to obtain a second verification result; and
Step S083: in response to that the second verification result is passed, sending the request data to the body controller and performing the vehicle unlocking and locking operation by the body controller.

After the connection between the dynamic key authentication module and the user side is completed, the vehicle unlocking and locking operation may be performed according to the request of the user side. Specifically, the unlocking and locking request sent by the user side is parsed through the dynamic key authentication module to obtain corresponding request data, and then data verification is performed on the request data with the storage module to obtain the second verification result.

When the second verification result is passed, it is considered that the current user side has permission for vehicle unlocking and locking, and the request data is sent to the body controller, which performs the corresponding vehicle unlocking and locking operation.

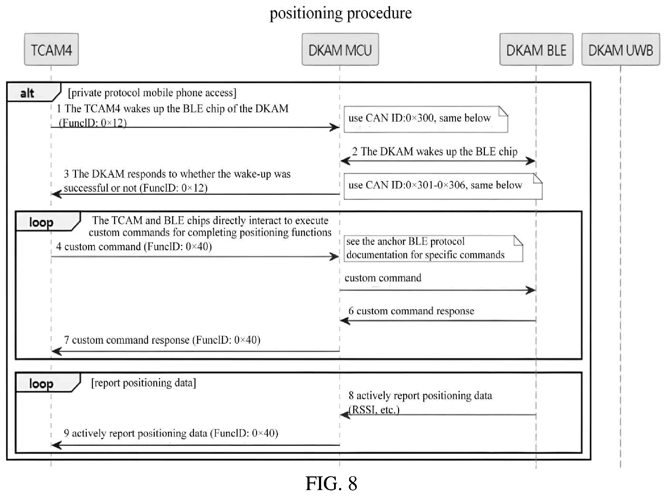

More specifically, as shown in FIG. 8, FIG. 8 is a flowchart of completing vehicle control through a dynamic key authentication module in the vehicle unlocking and locking method of the present application.

Since data interaction and corresponding unlocking and locking operations are performed through the dynamic key authentication module whether the first communication module is invalid or valid, in addition to the vehicle unlocking and locking function, a positioning process may also be performed through the dynamic key authentication module.

After the connection between the vehicle's dynamic key authentication module and the user side is completed, a custom command may be sent to the dynamic key authentication module, and the dynamic key authentication module responds to the custom command to obtain vehicle positioning.

Finally, the vehicle positioning data is reported and sent to the corresponding user side.

It should be understood that the above solution is merely an example. In this embodiment, operation instructions such as vehicle starting and vehicle automatic parking may also be included.

Through the above solution, polling detection is performed through the second communication module of the dynamic key authentication module; when a communication device of the user side is detected, a connection request is sent to the user side through the second communication module, the user side responds to the connection request and sends an unlocking and locking request to the dynamic key authentication module; and the unlocking and locking request sent by the user side is received through the dynamic key authentication module. The second communication module of the dynamic key authentication module completes connection with the vehicle and executes the corresponding unlocking and locking operation, thereby solving the problem that the vehicle cannot be unlocked/locked when the BLE master node fails and improving the efficiency of vehicle unlocking and locking.

In addition, the embodiments of the present application further provide a vehicle unlocking and locking apparatus, including: a detection module, a connection module and a vehicle unlocking and locking module.

The detection module is configured to detect, by the dynamic key authentication module, a connection state of the first communication module to obtain a detection result.

The connection module is configured, if the detection result is abnormal, to connect, by the dynamic key authentication module, to the user side, and receive, by the dynamic key authentication module, an unlocking and locking request sent by the user side.

The vehicle unlocking and locking module is configured to execute, according to the unlocking and locking request, a vehicle unlocking and locking operation by the body controller.

In addition, the embodiments of the present application further provide a terminal device, including a memory, a processor, and a vehicle unlocking and locking program stored on the memory and executable on the processor. The vehicle unlocking and locking program, when executed by the processor, implements the steps of the above vehicle unlocking and locking method.

Since the vehicle unlocking and locking program, when executed by the processor, adopts all of the technical solutions of the foregoing embodiments, it has at least all of the beneficial effects brought by all of the technical solutions of the foregoing embodiments, and details thereof will not be repeated herein one by one.

In addition, the embodiments of the present application further provide a computer-readable storage medium, on which a vehicle unlocking and locking program is stored. The vehicle unlocking and locking program, when executed by a processor, implements the steps of the above vehicle unlocking and locking method.

Since the vehicle unlocking and locking program, when executed by the processor, adopts all of the technical solutions of the foregoing embodiments, it has at least all of the beneficial effects brought by all of the technical solutions of the foregoing embodiments, and details thereof will not be repeated herein one by one.

Compared with the related art, through the vehicle unlocking and locking method, apparatus, terminal device, and storage medium provided by the embodiments of the present application, the connection state of the first communication module is detected by the dynamic key authentication module to obtain a detection result; if the detection result is abnormal, the user side is connected to the dynamic key authentication module and an unlocking and locking request sent by the user side is received by the dynamic key authentication module; and according to the unlocking and locking request, a vehicle unlocking and locking operation is executed by the body controller. Thus, the problem that the vehicle cannot be unlocked/locked when the BLE master node fails is solved, vehicle unlocking and locking is achieved, and the efficiency of vehicle unlocking and locking is improved. The solution of the present application addresses the problem that, in the process of waking up a slave node via a BLE master node to perform an unlocking and locking procedure, failure of the master node renders the entire vehicle unable to be locked or unlocked, or even started, resulting in low efficiency. To this end, a vehicle unlocking and locking method is designed. The effectiveness of the vehicle unlocking and locking method of the present application is verified during vehicle unlocking and locking, and finally the efficiency of vehicle unlocking and locking is significantly improved by the method of the present application.

Compared with the existing technology, the solution of the embodiments of the present application has the following advantages.
1. A dual-master-node solution is proposed, and the second master node is also one of the slave nodes. The two master nodes implement the same function and adopt heartbeat handshaking therebetween. When the first master node fails, switching is performed to the second master node.
2. By means of broadcasting packets from the master-node BLE, the second master node (slave node) receives heartbeat packets, and monitors whether there are normally working nodes in the Bluetooth key.

It should be noted that, in this document, the terms "comprise", "include", or any other variants thereof are intended to cover non-exclusive inclusion, such that a process, method, article, or system including a series of elements includes not only those elements, but also other elements not expressly listed, or elements inherent to such process, method, article, or system. Without further limitation, an element defined by the phrase "including a ..." does not exclude the presence of other identical elements in the process, method, article, or system including that element.

The serial numbers of the embodiments of the present application are merely for description and do not represent the merits of the embodiments.

From the description of the above implementations, those skilled in the art can clearly understand that the methods of the above embodiments may be implemented by software plus a necessary general hardware platform, and may of course also be implemented by hardware, although in many cases the former is a better implementation. Based on this understanding, the technical solution of the present application, in essence or the part contributing to the related art, may be embodied in the form of a software product. The computer software product is stored in a storage medium as described above (such as ROM/RAM, magnetic disk, optical disk), and includes several instructions for causing a terminal device (which may be a mobile phone, computer, server, controlled terminal, or network device, etc.) to execute the method of each embodiment of the present application.

The above are some embodiments of the present application, and are not intended to limit the patent scope of the present application. Any equivalent structural or equivalent process transformation made by using the contents of the description and drawings of the present application, or any direct or indirect application thereof in other related technical fields, shall similarly fall within the scope of patent protection of the present application.

## Claims

1. A vehicle unlocking and locking method, **characterized in that** the vehicle unlocking and locking method is applied to a vehicle side, the vehicle side comprises a dynamic key authentication module, a first communication module and a body controller, and the method comprises:
detecting a connection state of the first communication module by the dynamic key authentication module to obtain a detection result;
in response to the detection result indicating an abnormal condition, connecting to a user side by the dynamic key authentication module and receiving an unlocking and locking request sent by the user side through the dynamic key authentication module; and
executing a vehicle unlocking and locking operation by the body controller based on the unlocking and locking request.

2. The vehicle unlocking and locking method according to claim 1, wherein before the detecting the connection state of the first communication module by the dynamic key authentication module to obtain the detection result, the method further comprises:
receiving an initial connection request from the user side;
performing connection and verification by the first communication module according to the initial connection request to obtain an initial connection result; and
obtaining device information of the user side according to the initial connection result, and sending the device information to a preset storage module for storage.

3. The vehicle unlocking and locking method according to claim 1, wherein the detecting the connection state of the first communication module by the dynamic key authentication module to obtain the detection result comprises:
performing heartbeat packet detection on the first communication module by the dynamic key authentication module according to a preset detection duration;
in response to that a heartbeat packet of the first communication module is received within the detection duration, outputting the detection result indicating that the connection state of the first communication module is normal; and
in response to that no heartbeat packet of the first communication module is received within the detection duration, outputting the detection result indicating that the connection state of the first communication module is abnormal.

4. The vehicle unlocking and locking method according to claim 2, wherein after the detecting the connection state of the first communication module by the dynamic key authentication module to obtain the detection result, the method further comprises:
in response to that the detection result indicates that the connection state of the first communication module is normal, performing polling detection by the first communication module; and
in response to that a communication device of the user side is detected, performing data interaction with the user side by the dynamic key authentication module to obtain interaction data, and performing the vehicle unlocking and locking operation by the body controller according to the interaction data.

5. The vehicle unlocking and locking method according to claim 4, wherein the performing data interaction with the user side by the dynamic key authentication module to obtain interaction data, and performing the vehicle unlocking and locking operation by the body controller according to the interaction data comprises:
performing pairing authentication on the user side by the storage module to obtain an authentication result;
in response to that the authentication result is passed, sending the authentication result to the dynamic key authentication module by the storage module;
performing data interaction with the communication device of the user side by the dynamic key authentication module to obtain the interaction data;
performing data verification on the interaction data by the storage module to obtain a first verification result; and
in response to that the first verification result is passed, sending the interaction data to a preset body controller and performing the vehicle unlocking and locking operation by the body controller.

6. The vehicle unlocking and locking method according to claim 2, wherein the connecting to the user side by the dynamic key authentication module and receiving the unlocking and locking request sent by the user side through the dynamic key authentication module comprises:
performing polling detection by a second communication module of the dynamic key authentication module;
in response to that a communication device of the user side is detected, sending a connection request to the user side by the second communication module, responding to the connection request and sending the unlocking and locking request to the dynamic key authentication module through the user side; and
receiving the unlocking and locking request sent by the user side through the dynamic key authentication module.

7. The vehicle unlocking and locking method according to claim 6, wherein the executing the vehicle unlocking and locking operation by the body controller based on the unlocking and locking request comprises:
parsing the unlocking and locking request by the dynamic key authentication module to obtain request data;
performing data verification on the request data by the storage module to obtain a second verification result; and
in response to that the second verification result is passed, sending the request data to the body controller and performing the vehicle unlocking and locking operation by the body controller.

8. A vehicle unlocking and locking apparatus, **characterized by** comprising:
a detection module configured to detect a connection state of a first communication module by a dynamic key authentication module to obtain a detection result;
a connection module configured to, in response to the detection result indicating an abnormal condition, connect to a user side by the dynamic key authentication module and to receive an unlocking and locking request sent by the user side through the dynamic key authentication module; and
a vehicle unlocking and locking module configured to execute a vehicle unlocking and locking operation by a body controller based on the unlocking and locking request.

9. A terminal device, **characterized by** comprising:
a memory;
a processor; and
a vehicle unlocking and locking program stored in the memory and executable by the processor,
wherein when the vehicle unlocking and locking program is executed by the processor, the following steps are implemented:
detecting a connection state of the first communication module by the dynamic key authentication module to obtain a detection result;
in response to the detection result indicating an abnormal condition, connecting to a user side by the dynamic key authentication module and receiving an unlocking and locking request sent by the user side through the dynamic key authentication module; and
executing a vehicle unlocking and locking operation by the body controller based on the unlocking and locking request.

10. The terminal device according to claim 9, wherein when the vehicle unlocking and locking program is executed by the processor, the following steps are further implemented:
receiving an initial connection request from the user side;
performing connection and verification by the first communication module according to the initial connection request to obtain an initial connection result; and
obtaining device information of the user side according to the initial connection result, and sending the device information to a preset storage module for storage.

11. The terminal device according to claim 9, wherein when the vehicle unlocking and locking program is executed by the processor, the following steps are further implemented:
performing heartbeat packet detection on the first communication module by the dynamic key authentication module according to a preset detection duration;
in response to that a heartbeat packet of the first communication module is received within the detection duration, outputting the detection result indicating that the connection state of the first communication module is normal; and
in response to that no heartbeat packet of the first communication module is received within the detection duration, outputting the detection result indicating that the connection state of the first communication module is abnormal.

12. The terminal device according to claim 10, wherein when the vehicle unlocking and locking program is executed by the processor, the following steps are further implemented:
in response to that the detection result indicates that the connection state of the first communication module is normal, performing polling detection by the first communication module; and
in response to that a communication device of the user side is detected, performing data interaction with the user side by the dynamic key authentication module to obtain interaction data, and performing the vehicle unlocking and locking operation by the body controller according to the interaction data.

13. The terminal device according to claim 12, wherein when the vehicle unlocking and locking program is executed by the processor, the following steps are further implemented:
performing pairing authentication on the user side by the storage module to obtain an authentication result;
in response to that the authentication result is passed, sending the authentication result to the dynamic key authentication module by the storage module;
performing data interaction with the communication device of the user side by the dynamic key authentication module to obtain the interaction data;
performing data verification on the interaction data by the storage module to obtain a first verification result; and
in response to that the first verification result is passed, sending the interaction data to a preset body controller and performing the vehicle unlocking and locking operation by the body controller.

14. The terminal device according to claim 10, wherein when the vehicle unlocking and locking program is executed by the processor, the following steps are further implemented:
performing polling detection by a second communication module of the dynamic key authentication module;
in response to that a communication device of the user side is detected, sending a connection request to the user side by the second communication module, responding to the connection request and sending the unlocking and locking request to the dynamic key authentication module through the user side; and
receiving the unlocking and locking request sent by the user side through the dynamic key authentication module.

15. The terminal device according to claim 14, wherein when the vehicle unlocking and locking program is executed by the processor, the following steps are further implemented:
parsing the unlocking and locking request by the dynamic key authentication module to obtain request data;
performing data verification on the request data by the storage module to obtain a second verification result; and
in response to that the second verification result is passed, sending the request data to the body controller and performing the vehicle unlocking and locking operation by the body controller.

16. A computer-readable storage medium storing a vehicle unlocking and locking program, **characterized in that** when the vehicle unlocking and locking program is executed by a processor, the vehicle unlocking and locking method according to any one of claims 1 to 7 is implemented.
